# EUROPEAN PATENT SPECIFICATION

(11) **EP 2 815 006 B1**
(45) Date of publication and mention of the grant of the patent: **31.01.2018**
(21) Application number: 13704439.2
(22) Date of filing: 15.02.2013
(51) Int. Cl.: D01F 1/10, D01F 1/06, D01F 6/04, D06P 3/79, C08J 3/20, C08K 7/02, C08L 23/06, B29C 70/06, C08J 5/04

(54) **PROCESS TO ENHANCE COLORATION OF UHMWPE ARTICLE, THE COLORED ARTICLE AND PRODUCTS CONTAINING THE ARTICLE**
VERFAHREN ZUR VERSTÄRKUNG DER FÄRBUNG EINES UHMWPE-ARTIKELS, FARBIGER ARTIKEL UND PRODUKTE MIT DEM ARTIKEL
PROCÉDÉ POUR AMÉLIORER LA COLORATION D'UN ARTICLE UHMWPE, L'ARTICLE COLORÉ ET PRODUITS CONTENANT L'ARTICLE

(30) Priority: 16.02.2012 EP 12155820
(43) Date of publication of application: 24.12.2014
(73) Proprietor: DSM IP Assets B.V., 6411 TE Heerlen (NL)
(72) Inventor: HENSSEN, Giovanni Joseph Ida, NL-6100 AA Echt (NL); VERDAASDONK, Peto, NL-6100 AA Echt (NL)
(74) Representative: DSM Intellectual Property
(86) International application number: PCT/EP2013/053040
(87) International publication number: WO 2013/120983

(56) References cited:
- WO-A1-2005/103345
- WO-A1-2006/010521
- WO-A1-2008/046476
- WO-A1-2009/076990

## Description

The invention relates to a process for enhancing the color intensity of a colored molded ultra-high molecular weight polyethylene (UHMWPE) article.

A process for enhancing the color intensity of colored molded UHMWPE article is known from EP 0873445. EP 0873445 describes a colored UHMWPE yarn, comprising highly oriented fibers substantially consisting of polyethylene having a weight average molecular weight of at least 400 kg/mol. The fibers of EP 0873445 are prepared by a treatment of the fibers under supercritical solvent conditions by a disperse dye dissolved in supercritical carbon dioxide. Said treatment under supercritical conditions resulted in fibers with a higher color intensity and more uniformity compared to a treatment with dyes dissolved in non-super critical solvents such as heptane.

Nevertheless, color intensity of the yarns obtained by the process described in EP 0873445 can be further optimized. WO 2005/103345 discloses a process for producing dyeable polyolefin fibres and fabrics by providing a melt blend comprising a dyeability additive compound selected from the group consisting of the polyamides, copolyamides and polyetherpolyamides and at least one dyeability additive compound selected from the group consisting of ethylene vinyl acetate copolymers.

It is an aim of the present invention to provide a process for the manufacture of a colored molded UHMWPE article with optimized color. In particular the aim of the invention is to provide a colored molded UHMWPE article with improved color intensity. Another aim of the present invention is to provide a colored molded UHMWPE article with good color fastness during washing.

This aim is achieved according to the invention in that the process comprises the steps of
a) providing an UHMWPE, a coloring agent being a dye or a pigment and a color enhancer,
b) molding the UHMWPE into a molded article,
c) adding the color enhancer to the UHMWPE before or during the molding step and
d) adding the coloring agent to the UHMWPE before, during or after the molding step,
wherein the color enhancer comprises a material with a hardness higher than the hardness of the molded article measured in the absence of the color enhancer, the material used to produce the color enhancer having a Moh's hardness of at least 2.5. It was surprisingly observed that the process of the present invention results in colored molded article with enhanced color intensity. It was further observed, that the colored molded article may have optimized color fastness during washing.

An important aspect of the invention is the discovery that color intensity of molded UHMWPE articles may be increased when the UHMWPE article further comprises a color enhancer according to the invention. By color enhancer in the context of the invention is understood an additive that enhances the color intensity of the colored article while preferably providing good color fastness. Said additive comprises particles made of a material with a hardness higher than the hardness of the molded article measured in the absence of the color enhancer. Materials that impart color intensity may be organic or inorganic. Preferably the material is inorganic material. By inorganic material in the context of the present invention is understood a material substantially devoid of covalently bond carbon atoms and hence exclude any organic material such as hydrocarbons and especially polymeric materials. In particular inorganic material refers to compounds comprising metals, metal oxides, clay, silica, silicates or mixtures thereof but also include carbides, carbonates, cyanides, as well as the allotropes of carbon such as diamond, graphite, grapheme, fullerene and carbon nanotubes. The use of inorganic color enhancers provides articles with optimized color intensity while the mechanical properties of the molded article are not negatively affected. Preferably the inorganic material is glass, a mineral or a metal or are carbon fibers. The material that is used to produce the color enhancer has a Moh's hardness of at least 2.5, more preferably at least 4, most preferably at least 6. Useful materials include, but are not limited to, metals, metal oxides, such as aluminum oxide, metal carbides, such as tungsten carbide, metal nitrides, metal sulfides, metal silicates, metal silicides, metal sulfates, metal phosphates, and metal borides. Other examples include silicon dioxide and silicon carbide. Other ceramic materials and combination of the above materials may also be used.

The particle size, particle size distribution, particle diameter and the quantity of particles of the color enhancer are all important parameters in optimizing color intensity while preserving mechanical properties of the molded article. A particulate form of the color enhancer may be used, with a powder form being generally suitable. For particles of substantially spherical shape, the average particle size is substantially equal to the average particle diameter. For particles of substantially oblong shape, such as needles or fibers, the particle size may refer to the length dimension, along the long axis of the particle, whereas the average particle diameter, or in short the diameter, refers to the average diameter of the cross-section which is perpendicular to the length direction of said oblong shape.

Selection of an appropriate particle size and diameter depends on the processing and on the molded article dimensions. In case of molded articles produced by a spinning process, the particles should be small enough to easily pass through the spinneret apertures. The particle size and diameter may be selected small enough to avoid appreciable deterioration of the fiber tensile properties. The particle size and diameter may have a log normal distributions.

In a preferred embodiment, the diameter of the color enhancer is at most 25 microns, preferably at most 20 microns and even more preferably at most 15 microns. Color enhancer with lower diameter may result in more homogeneous molded articles and may lead to less surface defects in the molded articles, especially if prepared by extrusion.

In another preferred embodiment, the diameter of the color enhancer is at least 0.01 micron, preferably at least 0.1 micron and even more preferred 1 micron. Color enhancer with larger diameter may result in an optimized molding step in the process of the present invention.

Suitable molded articles according to the invention may contain 0.1 - 20 volume % of the color enhancer, preferably 1 - 10 vol. %, even more preferably 2 - 7 vol. %.

In a preferred embodiment of the invention, at least part of the color enhancer are hard fibers having an aspect ratio of at least 3, more preferably the color enhancer substantially consists of hard fibers having an aspect ratio of at least 3. By hard fibers is herein understood fibers with a hardness higher than the hardness of the molded article measured in the absence of the hard finer.

In a further preferred embodiment, the aspect ratio of the hard fibers is at least 6, more preferably at least 10. This is because products comprising such molded articles not only show a good color intensity, but may provide increased cut resistance.

The aspect ratio of a hard fiber is the ratio between the length and the diameter of the hard fiber. The diameter and the aspect ratio of the hard fibers may easily be determined by using SEM pictures. For the diameter it is possible to make a SEM picture of the hard fibers as such, spread out over a surface and measuring the diameter at 100 positions, ad randomly selected, and than calculating the arithmetic average of the so obtained 100 values. For the aspect ratio it is possible to make a SEM picture of hard fibers in the molded article according to the invention and to measure the length of hard fibers that show up at or just below the surface of the molded article. Preferably the SEM pictures are made with backscattered electrons, providing a better contrast between the hard fibers and surface of the molded article.

Good examples of suitable hard fibers are produced out of glass, a mineral or a metal or are carbon fibers.

Preferably the hard fibers are spun fibers. Advantage of such fibers is that the diameter of the fibers has a rather constant value or is at least within a certain range. Because of this, there is no or only a very limited spread in the properties, for example the mechanical properties in the molded article according to the invention. This is even true when relatively high loads of color enhancer are used in the molded article according to the invention.

Good examples of such spun hard fibers are thin glass or mineral fibers spun by rotation techniques well known to the skilled person.

It is possible to produce the hard fibers as continuous filaments that are subsequently milled into hard fibers of much shorter length. Said milling process may reduce the aspect ratio of at least part of the hard fiber. Alternatively, discontinuous filaments may be produced, e.g. by jet spinning, optionally subsequently milled and used in the process of the invention. The hard fibers may be subjected to a reduction of their aspect ratio during the production process of the molded article.

In one embodiment carbon fibers are used as the hard fibers. Most preferably carbon fibers are used having a diameter of between 3 and 10 microns, more preferably between 4 and 6 microns. Molded articles containing the carbon fibers shows improved electrical conductivity, enabling the discharge of static electricity.

Preferably the hard fibers in the molded article according to the invention have an average diameter of at most 20 microns, more preferably at most 15 microns, most preferably at most 10 microns. In case of lower dimensions of the molded article preference will be given to hard fibers also with lower diameters.

Molded article includes in particular fibres, monofilaments, multifilament yarns, staple fibre yarns, tapes, strips and films. The molded article preferably is a fibre.

In a preferred embodiment, the molded article is a fibre with a linear density of at most 15 dtex, preferably at most 12 dtex, most preferably at most 10 dtex. This is because articles produced out of such a fiber not only show a good color intensity, but are also very flexible, providing a high level of comfort to the persons that wear the article. The linear density, also called titer, is measured by determining the weight in mg of 10 meters of material and is conveniently expressed in dtex (g/10km) or denier (den, g/9km).

The ultra high molecular weight polyethylene may be linear or branched, although preferably linear polyethylene is used. Linear polyethylene is herein understood to mean polyethylene with less than 1 side chain per 100 carbon atoms, and preferably with less than 1 side chain per 300 carbon atoms; a side chain or branch generally containing at least 10 carbon atoms. Side chains in a polyethylene or UHMWPE sample is determined by FTIR on a 2 mm thick compression molded film by quantifying the absorption at 1375 cm⁻¹ using a calibration curve based on NMR measurements (as in e.g. EP 0 269 151). The linear polyethylene may further contain up to 5 mol% of one or more other alkenes that are copolymerizable therewith, such as propene, butene, pentene, 4-methylpentene, octene. The linear polyethylene is of high molar mass with an intrinsic viscosity (IV, as determined on solutions in decalin at 135°C) of at least 4 dl/g; more preferably of at least 8 dl/g, most preferably of at least 10 dl/g. Intrinsic viscosity is a measure for molecular weight that can more easily be determined than actual molar mass parameters like Mn and Mw. High-molecular weight means a weight average molecular weight (Mw) of at least 400,000 g/mol.

In a preferred embodiment of the invention, the colored molded UHMWPE article essentially consists of the UHMWPE, the color enhancer and the coloring agent.

In a yet preferred embodiment of the invention, the colored molded UHMWPE article comprises highly oriented UHMWPE. In the context of the present invention, highly oriented means that the molded article has been drawn so that the UHMWPE polymer chains run substantially parallel with the direction of drawing. It is preferred for the degree of orientation F to be at least 0.90, more preferably at least 0.95. The degree of orientation is defined by the formula F = (90° - H°/2)90°, where H° is the width at half the height of the scattering intensity along the Debye ring of the strongest reflection on the equator. Molded articles comprising highly oriented UHMWPE may have a tensile strength of at least 1.2 GPa and a tensile modulus of at least 40 GPa in the direction of orientation. Preferably, the colored molded article is a highly oriented UHMWPE fibre comprising the color enhancer. The highly oriented UHMWPE fiber comprising the color enhancer may have a tensile strength of at least 1.2 GPa and a tensile modulus of at least 40 GPa.

Preferably the molding step b) of the process of the present invention is a gel spinning process, such as described for instance in EP 0205960 A, EP 0213208 A1, US 4413110, GB 2042414 A, EP 0200547 B1, EP 0472114 B1, WO 01/73173 A1, and Advanced Fiber Spinning Technology, Ed. T. Nakajima, Woodhead Publ. Ltd (1994), ISBN 1-855-73182-7, and references cited therein. Gel spinning is understood to include at least the steps of spinning at least one filament from a solution of ultra-high molecular weight polyethylene in a spin solvent; cooling the filament obtained to form a gel filament; removing at least partly the spin solvent from the gel filament; and drawing the filament in at least one drawing step before, during or after removing spin solvent.

Suitable coloring agents for the present invention are dyes or pigments, whereas best results were obtained with dyes. Dyes may be conventional ionic dyes i.e., acid or basic dyes, also called reactive dyes, and disperse dyes. Acid dyes contain one or more acidic groups e.g. -SO₃H or a salt thereof e.g. -SO₃Na. Common structural types of acid dyes are monoazo and anthraquinone dyes. Basic dyes contain basic groups e.g. -N(CH₃)₂ or salts thereof e.g. -NH(CH₃)₂Cl.

Preferably, the coloring agents used in the present invention are disperse dyes. Disperse dyes are preferably non-ionic and may be insoluble in water. They may be readily dissolved or dispersed in a solvent to obtain a dyeing bath. Such dyes are for example further described in EP 0732439.

Further examples of ionic and disperse dyes suitable for the present invention are listed in "Dyes and Pigments by Color Index and Generic Names" in Textile Chemist and Colorist, 24 (7), 1992, a publication of the American Association of Textile Chemists and Colorists included hereby by reference.

Preferably, the coloring agent used in the present invention has a molecular weight of at most 2000 g/mol. On the one hand, at higher molecular weights the dispersibility in common solvents, particularly in water, may deteriorate. On the other hand, the molded article's affinity to the coloring agent may be lower. Coloring agents having a molecular weight below 200 g/mol are readily absorbed by the molded article but can also be removed from the molded article relatively easily. This problem can be resolved for instance by chemically fixing such coloring agents in the molded article. Such fixing aids are known to the person skilled in the art. Preferably, the molecular weight of the coloring agent used in the process of the invention is at least 200 g/mol.

Especially preferred coloring agents used in the process according to the invention are azo dyes, quinophthalone dyes and anthraquinone dyes.

The process of the invention comprises the steps of
a) providing an UHMWPE, a coloring agent and a color enhancer,
b) molding the UHMWPE into a molded article,
c) adding the color enhancer to the UHMWPE before or during the molding step and
d) adding the coloring agent to the UHMWPE before, during or after the molding step.

According to step d) the coloring agent may be introduced at different stages in the process of the present invention.

By adding the coloring agent to the UHMWPE before or during the molding step is understood that the coloring agent will be present during the molding step of the process. Adding the coloring agent before or during the molding step may have the advantage that the coloring agent may be evenly distributed throughout the colored molded UHMWPE article.

In a preferred embodiment the coloring agent is added to the UHMWPE or to the color enhancer prior to the UHMWPE or the color enhancer being provided to the process. Such a process may have the advantage of an overall simplified production process of a colored molded UHMWPE article by avoiding additional handling steps of adding the coloring agent to the molded UHMWPE article.

In another preferred embodiment, the coloring agent is added to the UHMWPE after the molding step, i.e. the molded article comprising the UHMWPE and the color enhancer is contacted with the coloring agent. Contacting the molded article with the coloring agent may have the advantage of disconnecting molding and coloring step of the process, resulting in an increased flexibility of the process of the present invention. This may result in the advantage that a variety of colored molded UHMWPE articles made according to the process of the present invention may be made with less disturbance of said process. For instance, the molding step may be performed in a continuous process step, while the coloring step may be performed in batches.

The coloring process of a molded UHMWPE article according to the invention also includes a dying process of a product comprising said molded article, e.g. dying a fabric comprising a fiber.

In a preferred embodiment, the coloring agent is added to the process after the molding step by means of a coloring agent comprising solution or dispersion, more preferably a coloring agent comprising solution. In such case, the coloring agent can be readily added to the molded UHMWPE article by dipping the article into a container with said solution or dispersion, also called a dye bath. Alternatively, but not limiting, the solution or dispersion of the coloring agent may be sprayed onto the molded UHMWPE article or may be added to the UHMWPE article by using a cascading roll technique. The molded UHMWPE article may be colored multiple times by one or more coloring agents and/or coloring techniques.

Prior to contacting the molded UHMWPE article with the coloring agent, the molded article may be washed. Washing the molded article may remove impurities from the article surface and prepare the molded article for the coloring process. Washing of the molded article may be performed with hot or cold suitable solvents, e.g. water, optionally comprising one or more detergents or other additives. The washing process may comprise more than one washing steps and is preferably finalized with one or more rinsing steps with a suitable solvent, e.g. water.

Optionally the molded UHMWPE article may be dried before being contacted with the coloring agent.

In a preferred embodiment of the present invention, the molded UHMWPE article is contacted with the coloring agent by submerging the molded article in an aqueous dye bath comprising the coloring agent. An aqueous dye bath may have a pH value in the range from about 2 to 11, whereby the pH of a bath for an acid dye may be from about 2.5 to 6.5, the pH of a bath for a basic dye may be from about 8.5 to 10.5 and the pH for a bath for a disperse dye may be from about 4.5 to 6.5. The pH may be adjusted using a variety of compounds, such as organic or inorganic acids and bases as well as buffer systems commonly known in the art. A surfactant, typically a non-ionic surfactant may be used as to aid the dispersion of the coloring agent in the dye bath. The dye bath may be agitated to optimize the coloring process.

Optionally, the dye bath further comprises other substances; these include but are not limited to dye auxiliaries, e.g. Univadine PB., UV stabilizers, crosslinking agents, at least one further coloring agent.

A dye bath may be prepared by successively adding the required ingredients to water at room temperature. Preferably the pH is adjusted with a suitable acid or base before the dye is added to the bath. Before use, the dye bath may be heated.

Preferably, the coloring process in a dye bath is performed at a temperature from 30 to 130°C. Below 30°C, the migration of the coloring agent into the molded UHMWPE article may be too slow. Above 130°C, excessive shrinkage and strength loss occurs in the molded UHMWPE article. Preferably the molded articles to be colored are taut during the coloring process, as otherwise strength losses of the molded article might occur.

The coloring time in a dye bath is so chosen that the color intensity is as high as possible. In general, no appreciable further improvement in color intensity is obtained after a coloring time of 30 minutes, particularly after 60 minutes.

Optionally, the process of the invention further comprises washing of the colored molded article. Washing the colored molded article may remove impurities and excessive dye from the article surface. Washing of the colored molded article may be performed with hot or cold suitable solvents, e.g. water, optionally comprising one or more detergents or other additives. The washing may comprise more than one steps and is preferably finalized with one or more rinsing steps with a suitable solvent, e.g. water.

Standard equipment may be used to perform one or more of the described steps of the process. A twin screw extruder is preferably used to at least perform a part of the molding step b). Using a twin screw extruder may provide the advantage of a stable molding process as well as a homogeneous composition of the UHMWPE, the color enhancer and, if added before the molding process, the coloring agent in the molded UHMWPE article.

Optionally, the molded UHMWPE articles, preferably fibres, obtain higher color intensity if they undergo a mechanical operation prior to coloration. Mechanical operation particularly means exposing the fibres to a flexural load in such a way that a component force acts on the fibre perpendicularly to the direction of the fibre. In a still better embodiment of the process of the invention the molded article is therefore exposed to a flexural load prior to being dyed. Since, almost without exception, a flexural load also occurs in the processing of a molded article by, for instance, taslanization, crimping, twisting, doubling, weaving, knitting or braiding, the aforementioned advantages are also obtained when the molded articles are colored after they have been incorporated into an article.

The invention further relates to the colored molded UHMWPE article with enhanced color intensity obtainable by the process of the present invention.

The invention also relates to a product comprising the colored molded UHMWPE article according to the invention, preferably the invention relates to a fabric comprising the colored molded UHMWPE article.

Product containing the molded article of the invention may be, but are not limited to product chosen from the group consisting of fishing lines and fishing nets, ground nets, cargo nets and curtains, kite lines, dental floss, tennis racquet strings, canvas, tent canvas, nonwoven cloths, webbings, pressure vessels, hoses, umbilical cables, electrical, optical fibre, and signal cables, automotive equipment, building construction materials, cut and stab resistant and incision resistant articles, protective gloves, composite sports equipment, skis, helmets, kayaks, canoes, bicycles and boat hulls and spars, speaker cones, high performance electrical insulation, radomes, sails and geotextiles.

A fabric or product comprising the molded article according to the invention may be obtained by processing the colored molded article according to the invention. Alternatively, the fabric or product comprising the molded article may be obtained by dying a fabric or article comprising the molded article.

The amount of coloring agent present in the molded UHMWPE article generally amounts from 0.01 to 5 wt.%, preferably from 0.1 to 3 wt.%, even more preferably from 0.2 to 2 wt.% relative to the weight of the molded article. During the process, preferably a somewhat larger amount of coloring agent than the amounts targeted in the final article is added. Such larger amounts are used to compensate either for losses of dye during UHMwPE processing or not quantitative dye pickup during dying process.

The present invention will now be further elucidated by the following example and comparative experiment, without being limited thereto.

### Test procedures

Intrinsic Viscosity (IV) is determined according to ASTM-D1601/2004 at 135°C in decalin, the dissolution time being 16 hours, with DBPC as anti-oxidant in an amount of 2 g/l solution, by extrapolating the viscosity as measured at different concentrations to zero concentration. There are several empirical relations between IV and Mw, but such relation is highly dependent on molar mass distribution. Based on the equation M_{w} = 5.37*10⁴ [IV]^{1.37} (see EP 0504954 A1) an IV of 4.5 dl/g would be equivalent to a M_{w} of about 422 kg/mol.

Color intensity measurements were performed with a data spectrophotometer to determine the reflection (R) of the fabrics and to evaluate the dye concentration of the knitted fabric expressed as the K/S factor using the reflectance measurements. For the different employed dyes, the measurement was carried out at specific wavelengths (Blue Cibacet EL - B at 590nm, Turquoise Cibacet G at 610 nm, Black Cibacet EL - FGL at 590 nm). The reflection reading (R) is substituted into a modified form of the Kubelka Munck equation K/S = (1-R)²/2R and reported as the K/S value. (E.R. Trotman, "Dying and Chemical Technology of Textile Fibers" p 643, 4th Edition, 1970, Charles Griffin & Company Ltd., London, England).

Color fastness measurements were performed on the dyed fabric according to the standard EN ISO 105-C10, EN ISO 105-X12 and EN ISO 105-X05.

### Comparative experiment A, B and C

Dyneema® 440-SK65 was knitted into fabrics with an areal density of 260 grams per square meter in a single jersey construction on a flat knit 13 gauge Shima Seiki knitting machine. The fabrics were successively washed for 20 minutes at 70°C with 1 g/l Invadine DA (Huntsman) and 1 g/l sodium carbonate followed by rinsing with hot water at 70°C and cold water at 15°C.
The washed and rinsed fabrics were then subjected to coloring processes with Blue Cibacet EL - B (Fabric A), Turquoise Cibacet G (Fabric B) and Black Cibacet EL - FGL (Fabric C) respectively.
The dye bath was prepared by adding the dye auxiliary Univadine PB to water at 25°C. The pH was set to 5.5 using acetic acid. After 5 minutes the respective dyes were added to the solution. The amounts of auxiliaries and dyes where each 2 wt% based on the dry fabric. The rinsed fabric was submerged in the dye bath (approximately 1 liter for 100 g fabric) and the dye bath temperature was raised to a temperature of 110°C and kept at constant temperature for 60 min. The bath is cooled down to 60°C before the liquid is drained. The dyed fabric was successively rinsed with hot (70°C) and cold (15°C) water. The so obtained fabrics were air dried for 24 hours at ambient conditions.

The obtained colored fabrics of Dyneema® 440-SK65 have been evaluated for color intensity as reported in Table 1.

### Comparative Experiment D

Comparative Experiment A was repeated with the difference that the fabric was subjected to a dying process under supercritical CO₂ conditions as described in EP 0873445 B1. Here for the washed and rinsed fabric was air dried for 24 hours before being place in the autoclave. The autoclave was charged with 2 wt% of Blue Cibacet EL - B based on the dry fabric, purged with carbon dioxide and heated at a rate of 2°C/min to 120°C. After operation temperature was reached, the autoclave was pressurized to 25 MPa with carbon dioxide while stirring and maintaining the operating temperature. Pressure and temperature were kept for a dying time of 60 minutes. After the dying time, the autoclave was allowed to cool down to room temperature while the pressure was released at a rate of 1 MPa per minute. The dyed fabric was successively rinsed with hot (70°C) and cold (15°C) water and air dried for 24 hour at room temperature. The obtained colored fabrics of Dyneema® 440-SK65 has been evaluated for color intensity as reported in Table 1.

### Examples 1, 2 and 3

Experiments identical to the comparative experiments A, B and C have been performed with the difference, that the yarn employed to knit the fabric was prepared by gel-spinning technology from a dry blend consisting of 5 wt. % of mineral fibers, sold under the trade name RB215-Roxul™1000 with an average diameter of the mineral fibers of 5.5 microns, and 95 wt. % of a UHMwPE with an IV of 27.0 dl/g. Here for the dry blend was mixed with decalin, at a concentration of 9 wt. %. The so obtained slurry was fed to a twin screw extruder having a screw diameter of 25 mm, equipped with a gear pump. The solution was heated in this way to a temperature of 180°C. The solution was pumped through a spinneret having 64 holes, each hole having a diameter of 1 millimeter. The so obtained filaments were drawn in total with a factor of 80 and dried in a hot air oven. After drying, the filaments were further process into said fabric. 3 dyed fabrics were prepared by the dying process of the comparative examples A, B and C resulting in Fabric 1 (Blue Cibacet EL - B), Fabric 2 (Turquoise Cibacet G) and Fabric 3 (Black Cibacet EL - FGL). Fabric 1, 2 and 3 were subjected to test conditions identical to the comparative experiments. Results are reported in Table 1. Fabric 1 was further subjected to a color fastness test according to EN ISO 105. Results are reported in Table 2.

### Example 4

The supercritical CO₂ dying process according to the Comparative Experiment D was repeated with a fabric prepared according to Examples 1-3. Results are also reported in Table 1.

**Table 1**

| Comp. Exp. / Example | Color intensity (K/S factor) |
|---|---|
| Comp. Exp. A | 2.1 |
| Comp. Exp. B | 1.1 |
| Comp. Exp. C | 1.7 |
| Comp. Exp. D | 1.0 |
| Example 1 | 6.1 |
| Example 2 | 2.4 |
| Example 3 | 5.3 |
| Example 4 | 2.3 |

**Table 2**

| Color fastness of Fabric 1 | Level | Standard |
|---|---|---|
| Washing | 4 - 5 | EN ISO 105-C10 |
| Staining | 4 - 5 | EN ISO 105-X12 |
| Dry Rubbing | 5 | EN ISO 105-X12 |
| Wet Rubbing | 4 - 5 | EN ISO 105-X12 |
| Methanol | 4 - 5 | EN ISO 105-X12 |
| DMF | 4 - 5 | EN ISO 105-X12 |
| Organic Solvent (dry cleaning) | 1 - 2 | EN ISO 105-X05 |

## Claims

1. Process for enhancing the color intensity of a colored molded UHMWPE article comprising the steps of
a) providing an UHMWPE, a coloring agent being a dye or a pigment and a color enhancer,
b) molding the UHMWPE into a molded UHMWPE article,
c) adding the color enhancer to the UHMWPE before or during the molding step and
d) adding the coloring agent to the UHMWPE before, during or after the molding step,
wherein the color enhancer is of a material with a hardness higher than the hardness of the molded article measured in the absence of the color enhancer, the material used to produce the color enhancer having a Moh's hardness of at least 2.5.

2. The process according to claim 1 wherein the molding step b) is performed by a gel spinning process.

3. The process according to any of the claims 1 or 2 wherein the coloring agent is added to the process after the molding step by means of a coloring agent comprising solution.

4. The process according to any of the claims 1-3, **characterized in that** the diameter of the color enhancer is at most 25 microns.

5. The process according to any of the claims 1-4, **characterized in that** the molded article comprises 0.1 - 20 volume % of color enhancer.

6. The process according to any of the claims 1-5, **characterized in that** at least part of the color enhancer are hard fibers having an aspect ratio of at least 3.

7. The process according to any of the claims 1-6, **characterized in that** the color enhancer is produced out of glass, a mineral or a metal or are carbon fibers.

8. The process according to any one of claims 6 or 7, **characterized in that** the hard fibers are spun fibers.

9. The process according to any of the claims 1-8 wherein the molded article is a fibre, wherein the titer of the fiber is at most 15 dtex.

10. The process according to any of the claims 1-9, **characterized in that** the coloring agent is a disperse dye.

11. The process according to any of the claims 1-10, **characterized in that** the coloring agent has a molecular weight of at most 2000 g/mol.

12. The process according to any of the claims 1-11, **characterized in that** the coloring agent is selected from the group consisting of azo dyes, quinophthalone dyes and anthraquinone dyes.

13. A colored molded UHMWPE article with enhanced color intensity obtainable by the process of claims 1 to 12.

14. A product comprising the colored molded UHMWPE article of claim 13.

## Patentansprüche

1. Verfahren zum Verstärken der Farbintensität eines gefärbten UHMWPE-Formkörpers, umfassend die Schritte
a) Bereitstellen eines UHMWPE, eines Farbmittels, das ein Farbstoff oder ein Pigment ist, und eines Farbverstärkers,
b) Formen des UHMWPE zu einem UHMWPE-Formkörper,
c) Zugeben des Farbverstärkers zu dem UHMWPE vor dem oder während des Formungsschritt(s) und
d) Zugeben des Farbmittels zu dem UHMWPE vor dem, während des oder nach dem Formungsschritt(s),
wobei der Farbverstärker aus einem Material besteht, dessen Härte höher ist als die ohne Vorhandensein des Farbverstärkers gemessene Härte des Formkörpers, wobei das zum Herstellen des Farbverstärkers verwendete Material eine Mohs-Härte von wenigstens 2,5 aufweist.

2. Verfahren gemäß Anspruch 1, wobei der Formungsschritt b) durch ein Gelspinnverfahren durchgeführt wird.

3. Verfahren gemäß einem der Ansprüche 1 oder 2, wobei das Farbmittel mithilfe einer farbmittelhaltigen Lösung nach dem Formungsschritt zu dem Verfahren zugegeben wird.

4. Verfahren gemäß einem der Ansprüche 1-3, **dadurch gekennzeichnet, dass** der Durchmesser des Farbverstärkers höchstens 25 Mikrometer beträgt.

5. Verfahren gemäß einem der Ansprüche 1-4, **dadurch gekennzeichnet, dass** der Formkörper 0,1-20 vol.-% Farbverstärker umfasst.

6. Verfahren gemäß einem der Ansprüche 1-5, **dadurch gekennzeichnet, dass** es sich bei wenigstens einem Teil des Farbverstärkers um harte Fasern mit einem Aspektverhältnis von wenigstens 3 handelt.

7. Verfahren gemäß einem der Ansprüche 1-6, **dadurch gekennzeichnet, dass** der Farbverstärker aus Glas, einem Mineral oder einem Metall hergestellt ist oder dass es sich dabei um Karbonfasern handelt.

8. Verfahren gemäß einem der Ansprüche 6 oder 7, **dadurch gekennzeichnet, dass** die harten Fasern gesponnene Fasern sind.

9. Verfahren gemäß einem der Ansprüche 1-8, wobei der Formkörper eine Faser ist, wobei die Feinheit der Faser höchstens 15 dtex beträgt.

10. Verfahren gemäß einem der Ansprüche 1-9, **dadurch gekennzeichnet, dass** das Farbmittel ein Dispersionsfarbstoff ist.

11. Verfahren gemäß einem der Ansprüche 1-10, **dadurch gekennzeichnet, dass** das Farbmittel ein Molekulargewicht von höchstens 2000 g/mol aufweist.

12. Verfahren gemäß einem der Ansprüche 1-11, **dadurch gekennzeichnet, dass** das Farbmittel ausgewählt ist aus der Gruppe bestehend aus Azofarbstoffen, Chinophthalonfarbstoffen und Anthrachinonfarbstoffen.

13. Gefärbter UHMWPE-Formkörper mit verstärkter Farbintensität, erhältlich durch das Verfahren gemäß Ansprüchen 1 bis 12.

14. Produkt, umfassend den gefärbten UHMWPE-Formkörper gemäß Anspruch 13.

## Revendications

1. Procédé d'amélioration de l'intensité de coloration d'un article en UHMWPE moulé coloré, comprenant les étapes qui consistent à :
a) fournir un UHMWPE, un agent colorant, lequel est un colorant ou un pigment, et un renforceur de couleur,
b) mouler l'UHMWPE pour produire un article en UHMWPE moulé,
c) ajouter le renforceur de couleur à l'UHMWPE avant ou durant l'étape de moulage , et
d) ajouter l'agent colorant à l'UHMWPE avant, durant ou après l'étape de moulage,
dans lequel le renforceur de couleur se compose d'un matériau ayant une dureté plus élevée que la dureté de l'article moulé mesurée en l'absence du renforceur de couleur, le matériau utilisé pour produire le renforceur de couleur ayant une dureté Mohs d'au moins 2,5.

2. Procédé selon la revendication 1, dans lequel l'étape de moulage b) est réalisée en utilisant un procédé de filage à l'état de gel.

3. Procédé selon l'une quelconque des revendications 1 ou 2, dans lequel l'agent colorant est ajouté au procédé après l'étape de moulage au moyen d'une solution comprenant un agent colorant.

4. Procédé selon l'une quelconque des revendications 1 à 3, **caractérisé en ce que** le diamètre du renforceur de couleur est d'au maximum 25 microns.

5. Procédé selon l'une quelconque des revendications 1 à 4, **caractérisé en ce que** l'article moulé comprend 0,1 à 20 % en volume du renforceur de couleur.

6. Procédé selon l'une quelconque des revendications 1 à 5, **caractérisé en ce qu'**au moins une partie du renforceur de couleur est constituée de fibres dures ayant un rapport d'allongement d'au moins 3.

7. Procédé selon l'une quelconque des revendications 1 à 6, **caractérisé en ce que** le renforceur de couleur est produit à partir de verre, d'un minéral ou d'un métal ou est constitué de fibres de carbone.

8. Procédé selon l'une quelconque des revendications 6 ou 7, **caractérisé en ce que** les fibres dures sont des fibres filées.

9. Procédé selon l'une quelconque des revendications 1 à 8, dans lequel l'article moulé est une fibre, dans lequel le titre de la fibre est d'au maximum 15 dtex.

10. Procédé selon l'une quelconque des revendications 1 à 9, **caractérisé en ce que** l'agent colorant est un colorant dispersé.

11. Procédé selon l'une quelconque des revendications 1 à 10, **caractérisé en ce que** l'agent colorant a une masse moléculaire d'au maximum 2 000 g/mol.

12. Procédé selon l'une quelconque des revendications 1 à 11, **caractérisé en ce que** l'agent colorant est sélectionné dans le groupe constitué de colorants azoïques, de colorants quinophtalones et de colorants anthraquinones.

13. Article en UHMWPE moulé coloré ayant une intensité de coloration améliorée, pouvant être obtenu par le procédé selon les revendications 1 à 12.

14. Produit comprenant l'article en UHMWPE moulé coloré selon la revendication 13.
